# EUROPÄISCHE PATENTANMELDUNG

(11) **EP 3 648 257 A1**
(43) Veröffentlichungstag der Anmeldung: **06.05.2020**
(21) Anmeldenummer: 18203069.2
(22) Anmeldetag: 29.10.2018
(51) Int. Cl.: H01R 12/71, H01R 13/66, H05K 5/00, B62M 6/45, B62M 6/60

(54) **STECKVERBINDER, INSBESONDERE FÜR EIN ELEKTROFAHRRAD**

(71) Anmelder: Werner Wirth GmbH, 22525 Hamburg (DE)
(72) Erfinder: Höppner, Sven, 22525 Hamburg (DE)
(74) Vertreter: Glawe, Delfs, Moll

(57) **Zusammenfassung**

Steckverbinder, insbesondere für ein Elektrofahrrad, mit einer Mehrzahl von Anschlusskontakten (35) und einer Mehrzahl von Steckkontakten (22). Der Steckverbinder umfasst eine Platine (27). Auf der Platine ist eine Verteiler-Leiterbahn (36) ausgebildet, die einen elektrischen Kontakt zwischen einer ersten Anzahl von Anschlusskontakten (35) und einer davon verschiedenen zweiten Anzahl von Steckkontakten (22) vermittelt.

## Beschreibung

Die Erfindung betrifft einen Steckverbinder, insbesondere für ein Elektrofahrrad.

Fahrräder können unterstützende elektrische Motoren aufweisen, um den Fahrradfahrer z.B. bei Steigungen oder beim Beschleunigen zu unterstützen. Die Motoren solcher Elektrofahrräder können am Tretlager angeordnet sein und Sensoren aufweisen, die das Drehmoment am Tretlager und die Geschwindigkeit des Fahrrads erfassen. Ein Schaltkreis auf einer Platine bestimmt aus einem Vergleich der Messdaten, ob der Motor das Elektrofahrrad beschleunigen muss, um dem Fahrer zu entlasten bzw. um eine vorbestimmte Geschwindigkeit zu halten. Bei Bremsmanövern können diese Motoren bei der Rekuperation als Generatoren mitwirken. Die umgewandelte Energie kann in externe elektrische Speicher eingespeist und zu einem späteren Zeitpunkt wieder abgerufen werden. Weiter können die Motoren als Energiequelle für Peripheriegeräte wie Beleuchtung, Geschwindigkeitsanzeige usw. dienen.

Dazu benötigen die Motoren elektrische Leitungen zu den Energiespeichern und den Peripheriegeräten (z.B. Bedienelemente, Beleuchtung, Bremse, Getriebe), um Energie oder Signale zu übermitteln. Da die Peripheriegeräte in der Regel nicht am Motor selbst sondern an einer anderen Stelle am Rahmen des Fahrrads angebracht sind, werden zur Verbindung Kabel benutzt, die über elektrische Steckverbindungen mit entsprechenden Anschlüssen verbunden werden.

Bekannt sind elektrische Anschlusslösungen, bei denen das Kabel durch das Motorgehäuse hindurchgeführt ist und bei denen direkt am Motorgehäuse keine Möglichkeit besteht, die elektrische Verbindung zu trennen. Eine elektrische Steckverbindung gibt es erst in einigem Abstand von dem Motorgehäuse. Häufig ist die elektrische Steckverbindung in der Mitte eines Kabels angeordnet, also als sogenannte fliegende Steckverbindung ausgebildet.

Bekannt sind auch Steckverbinder, die fest am Motorgehäuse installiert sind, EP 2 978 077 A1. Bislang ist es üblich, innerhalb des Steckverbinders jeden Steckkontakt entlang einem separaten elektrischen Weg mit einem Anschlusskontakt zu verbinden.

Der Erfindung liegt die Aufgabe zugrunde, einen Steckverbinder vorzustellen, der wenig Raum beansprucht. Ausgehend vom genannten Stand der Technik wird die Aufgabe gelöst mit den Merkmalen des Anspruchs 1. Vorteilhafte Ausführungsformen sind in den Unteransprüchen angegeben.

Der erfindungsgemäße Steckverbinder hat eine Mehrzahl von Anschlusskontakten und eine Mehrzahl von Steckkontakten. Der Steckverbinder umfasst eine Platine. Auf der Platine ist eine Verteiler-Leiterbahn ausgebildet, die einen elektrischen Kontakt zwischen einer ersten Anzahl von Anschlusskontakt und einer zweiten Anzahl von Steckkontakten vermittelt, wobei die erste Anzahl von der zweiten Anzahl abweicht.

Indem der Steckverbinder eine Platine umfasst, auf der der elektrische Weg zwischen den Anschlusskontakten und den Steckkontakten verzweigt wird, wird eine sehr platzsparende Möglichkeit vorgestellt, elektrische Signale innerhalb des Steckverbinders zu verteilen. Damit wird die Möglichkeit eröffnet, um beispielsweise das Antriebsgehäuse eines Elektrofahrrads insgesamt kompakter zu gestalten.

In einer Ausführungsform ist die Anzahl der an die Verteiler-Leiterbahn angeschlossenen Anschlusskontakte kleiner als die Anzahl der an die Verteiler-Leiterbahn angeschlossenen Steckkontakte. Insbesondere kann die Verteiler-Leiterbahn einen elektrischen Kontakt zwischen einem einzelnen Anschlusskontakt und einer Mehrzahl von Steckkontakten vermitteln. Von der Erfindung umfasst ist auch die umgekehrte Gestaltung, bei der die Anzahl der an die Verteiler-Leiterbahn angeschlossenen Anschlusskontakte größer ist als die Anzahl der an die Verteiler-Leiterbahn angeschlossenen Steckkontakte, wobei insbesondere genau ein Steckkontakt an die Verteiler-Leiterbahn angeschlossen sein kann.

Der Steckverbinder kann so gestaltet sein, dass die Anzahl der Anschlusskontakte von der Anzahl der Steckkontakte abweicht. Insbesondere kann die Anzahl der Anschlusskontakte kleiner sein als die Anzahl der Steckkontakte, wobei auch die umgekehrte Gestaltung möglich ist.

Der erfindungsgemäße Steckverbinder kann eine Mehrzahl von Steckeraufnahmen umfassen, die zur Aufnahme eines elektrischen Steckers ausgelegt sind. Beispielsweise kann der Steckverbinder wenigstens zwei Steckeraufnahmen, vorzugsweise wenigstens vier Steckeraufnahmen, weiter vorzugsweise wenigstens sechs Steckeraufnahmen aufweisen. In einer Ausführungsform umfasst der Steckverbinder sieben Steckeraufnahmen.

Die Steckeraufnahmen können im Querschnitt rund sein oder eine sonstige Querschnittsform haben, die an sich keine eindeutige Winkelposition für den Stecker definiert. Um ein falsches Einstecken eines Steckers zu vermeiden, können die Steckeraufnahmen codiert sein, so dass ein Stecker nur in genau einer Winkelposition in die Steckeraufnahme eingesetzt werden kann.

Die Steckeraufnahmen können paarweise verschiedene Querschnitte aufweisen, um zu verhindern, dass ein falscher Stecker in eine Steckeraufnahme eingesteckt werden kann. Umfasst der Steckverbinder eine Mehrzahl von Steckeraufnahmen mit nicht eindeutigem Querschnitt, so können die Steckeraufnahmen codiert sein, um das Einführen eines falschen Steckers zu verhindern.

Die Steckeraufnahmen können mit einem Rastmechanismus ausgestattet sein, in die ein Element eines Steckers einrasten kann, um zu vermeiden, dass der Stecker sich unbeabsichtigt aus der Steckeraufnahme löst.

Jede der Steckeraufnahmen kann wenigstens zwei Steckkontakte umfassen. Der Steckverbinder kann eine oder mehrere Steckeraufnahmen mit wenigstens drei Steckkontakten, vorzugsweise mit wenigstens vier Steckkontakten aufweisen.

Der Steckverbinder kann eine Platine umfassen, die mehr als eine Verteiler-Leiterbahn aufweist. Alle Verteiler-Leiterbahnen können sich von den Anschlusskontakten in Richtung der Steckkontakte verzweigen, was bedeutet, dass die Anzahl der an die Verteiler-Leiterbahn angeschlossenen Steckkontakte größer ist als die Anzahl der an die Verteiler-Leiterbahn angeschlossenen Anschlusskontakte. Von der Erfindung umfasst sind auch Varianten, bei denen ein Teil oder alle der Verteiler-Leiterbahnen sich von den Steckkontakten in Richtung der Anschlusskontakte verzweigen. Möglich sind auch Verteiler-Leiterbahnen, die mehrere Steckkontakten miteinander verbinden, ohne an einen Anschlusskontakt angeschlossen zu sein, wobei die Steckkontakte zu einer Steckeraufnahme oder zu mehreren Steckeraufnahmen gehören können. Der Steckverbinder kann mehrere Platinen umfassen, wobei jede der Platinen mit ein oder mehreren Verteiler-Leiterbahnen ausgestattet sein kann.

Die Platine kann eine Verteiler-Leiterbahn aufweisen, die einen Anschlusskontakt mit Steckkontakten von mehr als einer Steckeraufnahme verbindet. Insbesondere kann ein Anschlusskontakt mit Steckkontakten von wenigstens drei verschiedenen Steckeraufnahmen, weiter vorzugsweise von wenigstens fünf verschiedenen Steckeraufnahmen verbunden sein. In einer Ausführungsform umfasst die Platine eine erste Leiterbahn und eine zweite Leiterbahnen, die jeweils einen Anschlusskontakt mit Steckkontakten einer solchen Mehrzahl von Steckeraufnahmen verbinden.

Auf der Platine können ein oder mehrere Einzel-Leiterbahnen ausgebildet sein, die genau einen Anschlusskontakt mit genau einem Steckkontakt verbinden. Der Steckverbinder kann ein oder mehrere Steckeraufnahmen umfassen, wobei jede Steckeraufnahme wenigstens einen Steckkontakt umfasst, der über eine Einzel-Leiterbahn an einen Anschlusskontakt angeschlossen ist. In einer Ausführungsform ist jede elektrische Verbindung, die innerhalb des Steckverbinders zwischen einem Steckkontakte und einem Anschlusskontakt besteht über eine Einzel-Leiterbahn oder eine Verteiler-Leiterbahn der Platine geführt. Von der Erfindung umfasst sind auch Steckverbinder, bei denen ein Anschlusskontakt direkt, also unter Umgehung der Platine, mit einem Steckkontakt verbunden ist.

Die Platine kann an ihrer Oberseite und ihrer Unterseite mit Leiterbahnen ausgestattet sein, die eine elektrische Verbindung zwischen einem oder mehreren Anschlusskontakten und einem oder mehreren Steckkontakten vermitteln.

Die Anschlusskontakte des Steckverbinders können dazu bestimmt sein, im normalen Betrieb des Elektrofahrrads fest mit einem Anschluss des Elektrofahrrads verbunden zu sein. Die Anschlusskontakte können so angeordnet sein, dass sie nicht zugänglich sind, ohne dass Teile des Elektrofahrrads zerlegt werden.

Im Unterschied dazu können die Steckkontakte von außen zugänglich sein und dazu bestimmt sein, im normalen Betrieb des Elektrofahrrads verbunden und getrennt zu werden. Das Verbinden kann beispielsweise so erfolgen, dass der Nutzer des Elektrofahrrads einen Stecker in eine Steckeraufnahme des Steckverbinders einsteckt, so dass ein oder mehrere Steckkontakte der Steckeraufnahme mit entsprechenden elektrischen Kontakten des Steckers verbunden werden. Umgekehrt kann das Trennen der Steckkontakte erfolgen, indem ein Stecker aus einer Steckeraufnahme herausgezogen wird.

Der Steckverbinder kann ein Gehäuse umfassen, das die Platine wenigstens teilweise umgibt. Die Anschlusskontakte können aus dem Gehäuse heraus nach außen geführt sein, damit die Anschlusskontakte an einen Anschluss des Elektrofahrrads angeschlossen werden können. In einer Ausführungsform sind die Anschlusskontakte über Kabel mit der Platine verbunden. Die Platine kann dann vollständig von dem Gehäuse umschlossen sein, so dass lediglich die Kabel aus dem Gehäuse heraus nach außen geführt sind.

Die Anschlusskontakte können direkt an den Enden der Kabel ausgebildet sein. Die Anschlusskontakte können dann beispielsweise durch Löten mit entsprechenden Anschlüssen des Elektrofahrrads verbunden werden. Möglich ist auch, die Anschlusskontakte als Stecker zu gestalten. Dabei können mehrere oder alle Anschlusskontakte innerhalb eines gemeinsamen Steckergehäuses angeordnet sein.

In einer alternativen Ausführungsform ragt ein Abschnitt der Platine aus dem Gehäuse des Steckverbinders nach außen, wobei die Anschlusskontakte auf dem nach außen ragenden Abschnitt der Platine angeordnet sind. Die Anschlusskontakte können als Kontakt-Pads auf dem Platinenabschnitt gestaltet sein, sodass ein Stecker die Anschlusskontakte von oben und unten umfassen kann, um den elektrischen Anschluss zu dem Antrieb des Elektrofahrrads herzustellen. Möglich ist auch, dass die Anschlusskontakte als Steckbuchsenleiste der Platine ausgebildet sind, auf die ein von dem Antrieb des Elektrofahrrads kommender Stecker aufgesteckt werden kann.

Die Steckkontakte können Elemente der Platine sein, beispielsweise indem die Steckkontakte mit der Platine verlötet sind. Die Steckkontakte können als Einsteckkontakte (Male-Kontakte) oder als Aufnahmekontakte (Female-Kontakte) oder als eine Kombination aus beidem gestaltet sein.

Der Steckverbinder kann ein Gehäuse-Vorderteil umfassen, an dem die Steckeraufnahmen ausgebildet sind. Die Steckkontakte können durch Bohrungen in dem Gehäuse-Vorderteil hindurchgeführt sein, sodass die Steckkontakte in die Steckeraufnahmen hineinragen. Die Platine kann in einem Innenraum des Gehäuses angeordnet sein, wobei der Innenraum aus dem Gehäuse-Vorderteil und einem Gehäusedeckel gebildet wird.

Möglich ist auch, eine aus dem Gehäuse-Vorderteil und der Platine gebildete Einheit mit einer Gussmasse zu vergießen, um das Gehäuse zu vervollständigen. Als Gussmasse kommen beispielsweise ein Kunststoff oder ein Gießharz infrage, die in flüssigem Zustand in das Gehäuse eingebracht werden und dort aushärten. Damit kann der Steckverbinder und speziell die Platine vor Schäden durch eindringende Feuchtigkeit oder mechanische Belastungen geschützt werden.

Um die richtige Position der Platine relativ zu dem Gehäusekörper zu definieren, können die Platine und/oder der Gehäusekörper mit Positionierelementen versehen sein, die nur bei richtiger Positionierung der Platine relativ zu dem Gehäusekörper ineinander passen. Die Positionierelemente können beispielsweise einen an einem der beiden Teile ausgebildeten Vorsprung umfassen, der in einer Ausnehmung des anderen Teils eingreift. Zusätzlich oder alternativ dazu können Rastelemente vorgesehen sein, mit denen die Platine relativ zu dem Gehäusekörper fixiert wird. In einer Ausführungsform ist das Gehäuse-Vorderteil mit Rastvorsprüngen versehen, die den Umfang der Platine umgreifen.

Die Platine kann mit weiteren elektrischen oder elektronischen Bauteilen bestückt sein. Beispielsweise kann die Platine ein Bluetooth-Modul umfassen. Das Gehäuse des Steckverbinders kann einen Gehäusevorsprung umfassen, der dazu ausgelegt ist, dass Bluetooth-Modul aufzunehmen. Der Gehäusevorsprung kann in derselben Richtung vorspringen wie die Steckeraufnahmen. Die Platine kann mit weiteren Bauteilen wie beispielsweise LEDs, Spulen, Widerständen und ähnlichem ausgestattet sein.

Der erfindungsgemäße Steckverbinder kann dazu bestimmt sein, eine Schnittstelle zu einem Antrieb eines Elektrofahrrads zu bilden. Zu diesem Zweck kann der Steckverbinder mit einem Antriebsgehäuse des Elektrofahrrads verbunden werden. Der Steckverbinder kann einen Flansch umfassen, durch den ein in dem Antriebsgehäuse angeordneter Gehäusekörper des Steckverbinders von einer Außenseite des Steckverbinders getrennt wird. Die Außenseite des Steckverbinders kann für den Nutzer zugänglich sein.

Der Flansch des Steckverbinders kann eine umlaufende Dichtfläche bilden, die dazu ausgelegt ist, mit dem Antriebsgehäuse des Elektrofahrrads abzudichten. In dem Flansch können Bohrungen ausgebildet sein, über die der Steckverbinder mit dem Antriebsgehäuse verbunden wird. Die umlaufende Dichtfläche kann eine ununterbrochene Dichtstrecke bilden, die sich über den Umfang des Steckverbinders erstreckt und die peripher zu den Bohrungen angeordnet sein kann. Der Steckverbinder kann eine Dichtung umfassen, die sich entlang der Dichtfläche erstreckt und die vorzugsweise auch die Bohrungen umgreift.

Die Steckkontakte des Steckverbinders können dazu ausgelegt sein, den Antrieb des Elektrofahrrads mit elektrischer Energie zu versorgen, um Peripheriegeräte zu versorgen und/oder um Signale mit Peripheriegeräten auszutauschen. Die Peripheriegeräte können die Sensorik und/oder Teile des HMI (Human Interface) betreffen. Zu den Peripheriegeräten können beispielsweise ein Energiespeicher des Antriebs, eine Beleuchtung des Elektrofahrrads, ein Display, ein Getriebeschalter, ein Geschwindigkeitssensor und/oder einer Anzeige für den Ladezustand des Energiespeichers gehören. Die Steckkontakte des Steckverbinders können beispielsweise die Funktion einer Spannungsversorgung, eines Masseanschlusses und/oder eines Datenbusses übernehmen.

Die Erfindung betrifft außerdem ein mit einem solchen Steckverbinder ausgestattetes Elektrofahrrad. Die Anschlusskontakte des Steckverbinders können mit Anschlüssen des Antriebs des Elektrofahrrads verbunden sein. Die Verbindung kann so gestaltet sein, dass sie im bestimmungsgemäßen Betrieb vom Benutzer nicht getrennt wird. Die Steckkontakte des Steckverbinders können für den Nutzer zugänglich sein, sodass im bestimmungsgemäßen Betrieb Stecker aufgesteckt bzw. getrennt werden können.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes Elektrofahrrad;
- Fig. 2:: eine perspektivische Ansicht eines erfindungsgemäßen Steckverbinders;
- Fig. 3:: eine Ansicht von oben auf den Steckverbinder aus Fig. 2;
- Fig. 4:: einen Schnitt entlang Linie B-B in Fig. 3;
- Fig. 5:: einen Schnitt entlang Linie A-A in Fig. 3;
- Fig. 6:: eine weitere perspektivische Ansicht des Steckverbinders aus Fig. 2;
- Fig. 7:: eine Platine eines erfindungsgemäßen Steckverbinders;
- Fig. 8 bis 10:: verschiedene Varianten von Anschlusskontakten der Platine;
- Fig. 11:: eine Explosionsansicht eines erfindungsgemäßen Steckverbinders.

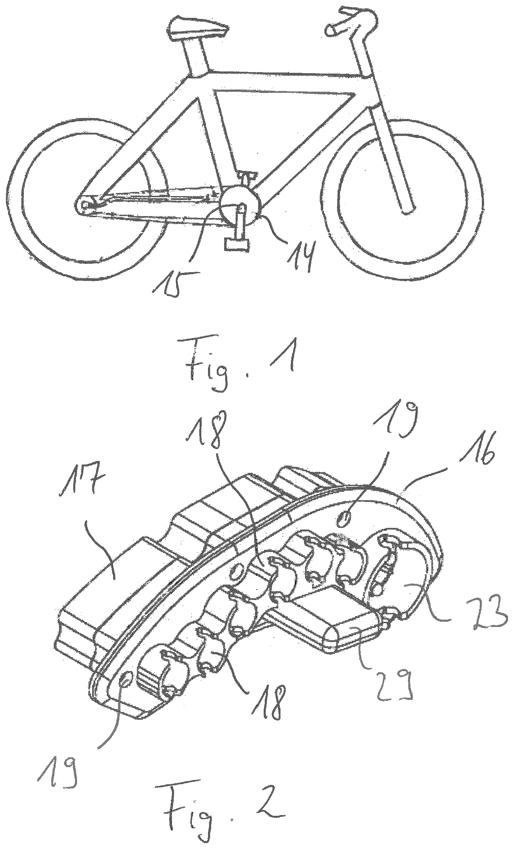

Ein in Fig. 1 gezeigtes Elektrofahrrad umfasst einen Elektroantrieb, der nahe dem Tretlager 14 des Elektrofahrrads angeordnet ist. Der Elektroantrieb unterstützt die Tretkurbelwelle 15 während der Fahrt, wenn zusätzliche Energie zur Beschleunigung oder bei Steigungen benötigt wird. Wenn keine Energie benötigt wird, nimmt er zusätzliche Energie auf, die zum Beispiel durch Bremsmanöver frei werden kann.

Der erfindungsgemäße Steckverbinder bildet die Schnittstelle zwischen dem Elektroantrieb und mit dem Elektroantrieb verbundenen Peripheriegeräten. Zu den Peripheriegeräten gehört beispielsweise ein Akku, über den der Elektroantrieb mit Energie versorgt wird. Weiterhin gehören zu den Peripheriegeräten Sensorelemente sowie Elemente des HMI (Human Interface). Solche Peripheriegeräte sind beispielsweise die Beleuchtung, ein Geschwindigkeitssensor, ein Display, ein Getriebeschalter. Der Nutzer kann einen Stecker in den Steckverbinder einstecken, um das Peripheriegerät anzuschließen, oder den Stecker aus dem Steckverbinder herausziehen, um das Peripheriegerät zu trennen. Zur Versorgung der Peripheriegeräte und zur Kommunikation mit den Peripheriegeräten sind typischerweise eine Spannungsversorgung, ein Masseanschluss und/oder eine oder mehrere Datenbusleitungen erforderlich. Der Steckverbinder ist mit einem Steckkontakt 22 für jeden der elektrischen Wege ausgestattet.

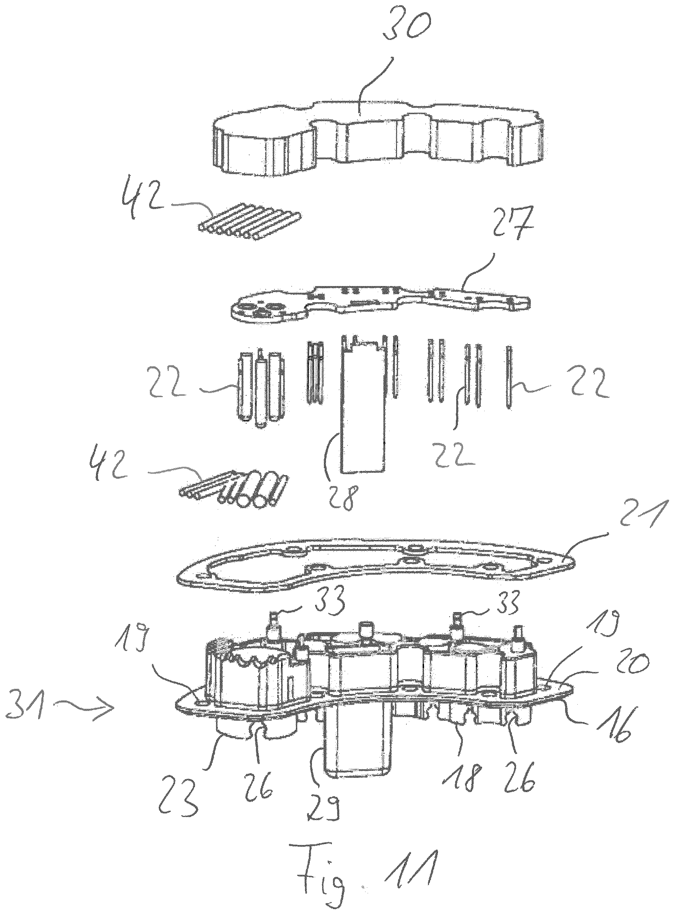

Gemäß Fig. 2 hat der Steckverbinder eine Form, die an die abgerundete Kontur des Elektroantriebs angepasst ist. Ein Flansch 16 des Steckverbinders liegt auf dem Antriebsgehäuse auf, ein Körper 17 des Steckverbinders ragt in den Innenraum des Elektroantriebs hinein. Die Außenseite, die mit einer Mehrzahl von Steckeraufnahmen 18, 23 versehen ist, weist nach außen und ist für den Nutzer zugänglich. Der Flansch 16 ist mit einer Mehrzahl von Bohrungen 19 versehen, über die der Steckverbinder an dem Antriebsgehäuse fest geschraubt ist. Die Bohrungen 19 sind in einer Dichtfläche 20 des Flanschs 16 angeordnet. Eine Dichtung 21 liegt auf der Dichtfläche 20 auf und bildet eine außerhalb der Bohrungen 19 angeordnete ununterbrochene Dichtstrecke, die sich über den gesamten Umfang des Steckverbinders erstreckt. Die Bohrungen 19 werden von der Dichtung 21 umfasst, so dass die Befestigungsschrauben, mit denen der Steckverbinder an dem Antriebsgehäuse befestigt ist, sich durch die Dichtung 21 hindurch erstrecken, siehe Fig. 11.

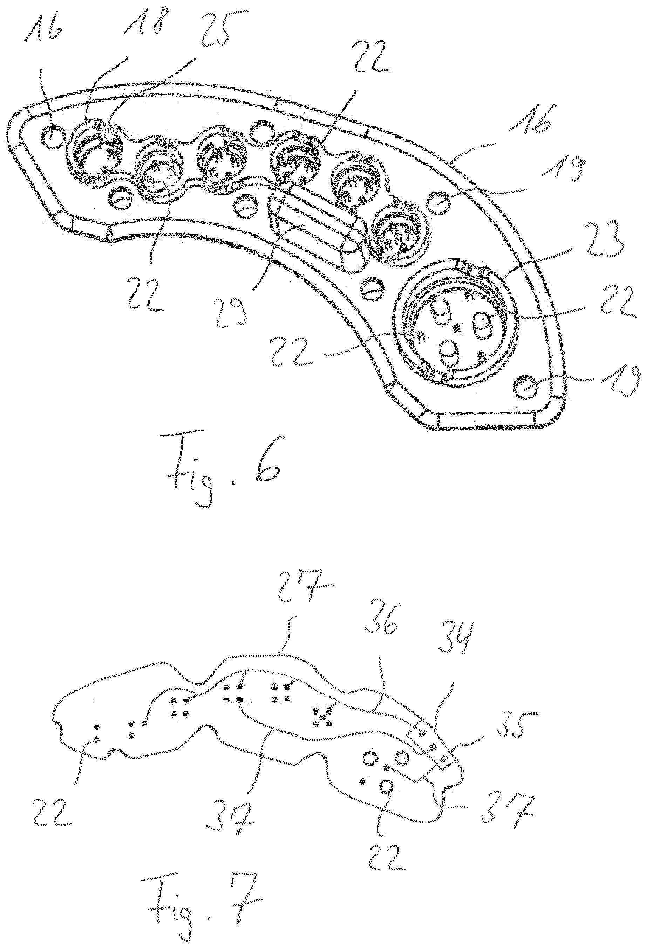

Der Steckverbinder umfasst gemäß Fig. 6 sechs Steckeraufnahmen 18 mit gleichem Durchmesser und eine Steckeraufnahme 23 mit größerem Durchmesser. Die Steckeraufnahme 23 dient der Stromversorgung und wird an die Batterie angeschlossen. Sie hat insgesamt sieben Steckkontakte 22, wobei die drei dickeren für die Stromversorgung bestimmt sind und die vier dünneren Informationen über den Ladezustand des Akkus übertragen. Die Steckeraufnahmen 18 dienen dem Anschluss der verschiedenen Peripheriegeräte. Die Steckeraufnahmen 18 haben zwischen zwei und fünf Steckkontakte 22. Die Steckeraufnahmen 18 sind durch peripher zu den Steckkontakten 22 angeordnete Strukturen 25 codiert, so dass jeder Stecker genau einer einzigen Winkelstellung in eine bestimmte Steckeraufnahme 18 passt. Jeweils am Umfang der Steckeraufnahmen 18, 23 ist eine Einraststruktur 26 ausgebildet, in die ein Vorsprung des Steckers einrasten kann, um ein unbeabsichtigtes Lösen des Steckers zu verhindern.

Gemäß Fig. 11 ist im Inneren des Steckverbinders eine Platine 27 angeordnet, mit der die Steckkontakte 22 in passenden Positionen verlötet sind. Die Steckkontakte 22 sind im zusammengesetzten Zustand des Steckverbinders durch Bohrungen in einem Gehäuse-Vorderteil 31 des Steckverbinders hindurchgeführt, so dass die Steckkontakte 22 wie in Fig. 6 gezeigt in die Steckeraufnahmen 18, 23 hineinragen. Außerdem ist mit der Platine 27 ein Bluetooth-Modul 28 verbunden, das im zusammengesetzten Zustand des Steckverbinders in einem Gehäusevorsprung 29 untergebracht ist. Darüber hinaus kann die Platine 27 mit weiteren elektrischen oder elektronischen Bauteilen ausgestattet sein, wie beispielsweise LEDs, Spulen und ähnlichem.

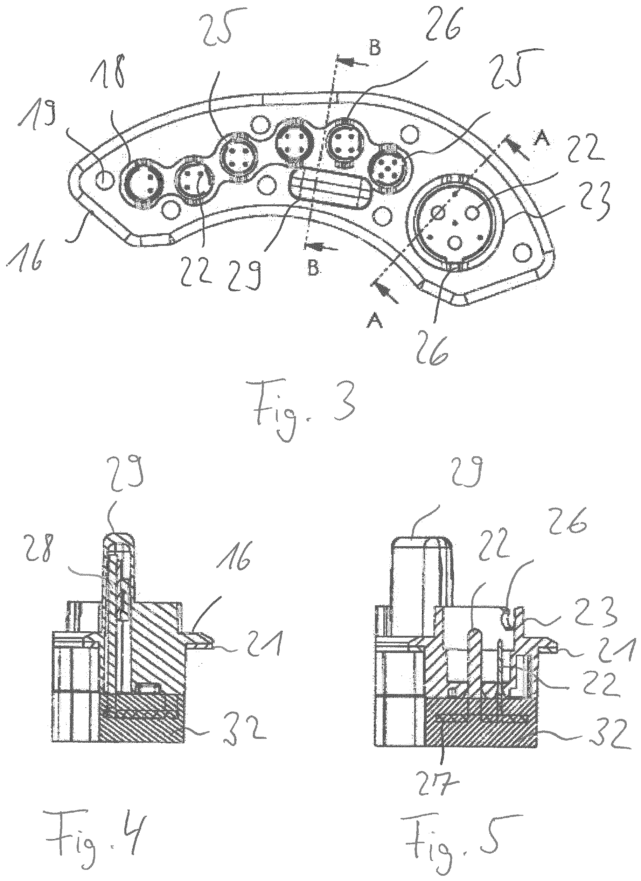

Gemäß Fig. 11 ist das Gehäuse-Vorderteil 31 mit Rastvorsprüngen 33 versehen, die den Umfang der Platine 27 umgreifen und die Platine 27 so in der passenden Position relativ zu dem Gehäuse-Vorderteil 31 halten. Bei der Ausführungsform gemäß Fig. 11 wird das Gehäuse an der Rückseite mit einem Gehäusedeckel 30 verschlossen. In alternativen Ausführungsformen wird das Gehäuse-Vorderteil 31 zunächst mit der Platine 27 bestückt und dann von der Rückseite mit einem flüssigen Kunststoffmaterial 32 vergossen, siehe Fig. 4 und 5.

In Fig. 7 ist eine Platine 27 dargestellt, bei der die Positionen der Steckkontakte 22 durch Punkte angedeutet sind. Die Platine 27 ist mit einem Anschlussbereich 34 versehen, über den der elektrische Weg von den Steckkontakten 22 zu den Anschlusskontakten 35 geführt wird. Über die Anschlusskontakte 35 wird der Steckverbinder an den Elektroantrieb des Fahrrads angeschlossen.

Bei der Platine 27 in Fig. 7 sind drei Anschlusskontakte 35 schematisch dargestellt. Die Platine 27 umfasst eine Leiterbahn 36, die sich von dem linken Anschlusskontakte 35 zu einer Mehrzahl von Steckkontakten 22 erstreckt. Eine solche Leiterbahn ist eine Verteiler-Leiterbahn 36 im Sinne der Erfindung. Die beiden anderen Anschlusskontakte 35 des Anschlussbereichs 34 sind über Einzel-Leiterbahnen 37 jeweils an einen einzelnen Steckkontakt 22 angeschlossen. Um den vorhandenen Platz gut zu nutzen, kann die Platine 27 auf ihrer Vorderseite und auf ihrer Rückseite mit Leiterbahnen 36, 37 versehen sein. Die Leiterbahnen 36, 37 sind so gestaltet, dass es von jedem Steckkontakt 22 einen elektrischen Weg zu genau einem Anschlusskontakt 35 gibt. Umgekehrt kann es von einem Anschlusskontakt 35 einen elektrischen Weg entweder zu genau einem Steckkontakte 22 geben (Einzel-Leiterbahn 37) oder zu einer Mehrzahl von Steckkontakten 22 geben (Verteiler-Leiterbahn 36). Der erfindungsgemäße Steckverbinder hat demnach eine geringere Anzahl von Anschlusskontakten 35 als von Steckkontakten 22.

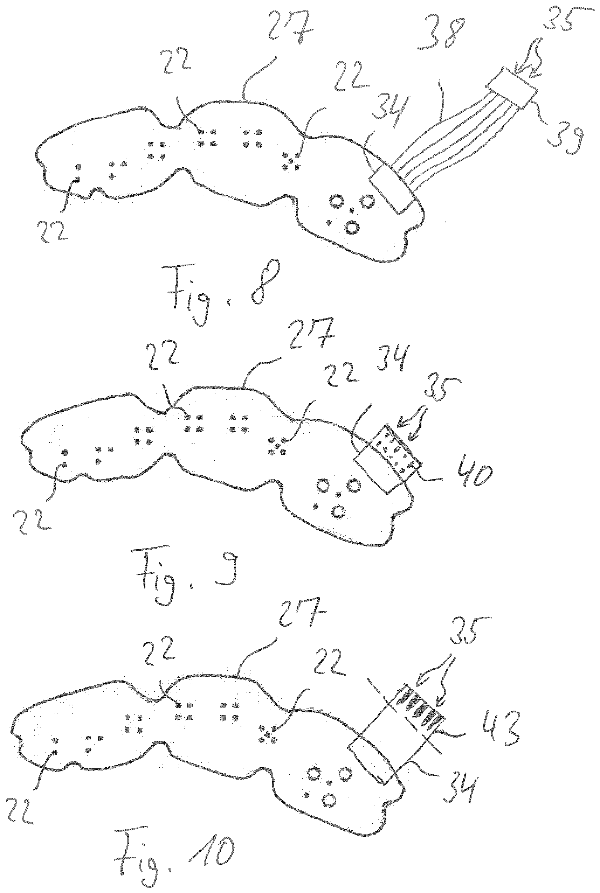

Für die Gestaltung der Anschlusskontakte gibt es verschiedene Varianten. In Fig. 8 ist für jeden Anschlusskontakt 35 ein Kabel 38 im Anschlussbereich 34 der Platine 27 an gelötet. Die Kabel 38 sind in einem Steckergehäuse 39 zusammengeführt, so dass die Anschlusskontakte 35 innerhalb des Steckergehäuses 39 angeordnet sind. In Fig. 11 sind Kabeltüllen 42 gezeigt, mit denen die Kabel 38 aus dem Gehäuse des Steckverbinders herausgeführt werden.

In der Ausführungsform gemäß Fig. 9 ist der Anschlussbereich 34 vergrößert und hat für jeden Anschlusskontakt 35 einen Kontakt-Pin 40. Ein Sammelstecker der Antriebseinheit des Elektrofahrrads kann auf die Kontakt-Bins 40 aufgesteckt werden, so dass alle Anschlusskontakt 35 gleichzeitig einen elektrischen Anschluss an den Elektroantrieb erhalten.

In Fig. 10 ist eine Ausführungsform dargestellt, bei der die Platine 27 einen vorspringenden Abschnitt aufweist, der über die Kontur des Steckverbindergehäuses (in gestrichelter Linie angedeutet) hinausragt. In dem von außen zugänglichen Platinenabschnitt 43 ist für jeden Anschlusskontakt 35 ein Kontaktpad 41 ausgebildet, wobei die Kontakt-Pads 41 sowohl auf der Oberseite als auch der Unterseite der Platine 27 angeordnet sein können. Über einen Stecker, der die Kontakt-Pads 41 von oben und unten klammert, kann der elektrische Anschluss zu dem Antrieb des Elektrofahrrads hergestellt werden.

## Patentansprüche

1. Steckverbinder, insbesondere für ein Elektrofahrrad, mit einer Mehrzahl von Anschlusskontakten (35) und einer Mehrzahl von Steckkontakten (22), wobei der Steckverbinder eine Platine (27) umfasst und wobei auf der Platine eine Verteiler-Leiterbahn (36) ausgebildet ist, die einen elektrischen Kontakt zwischen einer ersten Anzahl von Anschlusskontakten (35) und einer zweiten Anzahl von Steckkontakten (22) vermittelt, wobei die erste Anzahl von der zweiten Anzahl abweicht.

2. Steckverbinder nach Anspruch 1, **dadurch gekennzeichnet, dass** die erste Anzahl kleiner ist als die zweite Anzahl.

3. Steckverbinder nach Anspruch 1 oder 2, **gekennzeichnet durch** eine Mehrzahl von Steckeraufnahmen (18, 23), wobei jede Steckeraufnahme (18, 23) zur Aufnahme eines elektrischen Steckers ausgelegt ist.

4. Steckverbinder nach Anspruch 3, **dadurch gekennzeichnet, dass** jede Steckeraufnahme (18, 23) eine Mehrzahl von Steckkontakten (22) umfasst.

5. Steckverbinder nach Anspruch 3 oder 4, **dadurch gekennzeichnet, dass** ein Anschlusskontakt (35) mit Steckkontakten (22) von mehr als einer Steckeraufnahme (18, 23) elektrisch verbunden ist.

6. Steckverbinder nach einem der Ansprüche 1 bis 5, **dadurch gekennzeichnet, dass** die Platine (27) eine oder mehrere Einzel-Leiterbahnen (36) umfasst, die genau einen Anschlusskontakt (35) mit genau einem Steckkontakt (22) verbinden.

7. Steckverbinder nach einem der Ansprüche 1 bis 6, **dadurch gekennzeichnet, dass** Platine (27) an ihrer Oberseite und ihrer Unterseite mit Leiterbahnen (36, 37) ausgestattet ist, die eine elektrische Verbindung zwischen einem oder mehreren Anschlusskontakt (35) und einem oder mehreren Steckkontakten (22) vermitteln.

8. Steckverbinder nach einem der Ansprüche 1 bis 7, **dadurch gekennzeichnet, dass** die Anschlusskontakte (35) aus einem Gehäuse (30, 31, 32) des Steckverbinders nach außen geführt sind.

9. Steckverbinder nach Anspruch 8, **dadurch gekennzeichnet, dass** die Anschlusskontakte (35) durch Kabel (38) mit der Platine (27) verbunden sind, wobei die Kabel (38) aus dem Innenraum des Gehäuses (30, 31, 32) nach außen geführt sind.

10. Steckverbinder nach Anspruch 8, **dadurch gekennzeichnet, dass** ein Abschnitt (43) der Platine (27) aus dem Gehäuse (30, 31, 32) nach außen ragt und dass die Anschlusskontakte (35) auf dem nach außen ragenden Abschnitt (43) der Platine (27) angeordnet sind.

11. Steckverbinder nach Anspruch 8 oder 10, **dadurch gekennzeichnet, dass** die Anschlusskontakte (35) als Steckbuchsenleiste (40) auf der Platine (27) gestaltet sind.

12. Steckverbinder nach einem der Ansprüche 1 bis 11, **dadurch gekennzeichnet, dass** die Steckkontakte (22) Elemente der Platine (27) sind.

13. Steckverbinder nach einem der Ansprüche 1 bis 12, **dadurch gekennzeichnet, dass** ein Gehäuse des Steckverbinders gebildet wird, indem eine Einheit aus einem Gehäuse-Vorderteil (31) und der Platine (27) vergossen wird.

14. Steckverbinder nach einem der Ansprüche 1 bis 13, **dadurch gekennzeichnet, dass** die Platine (27) mit weiteren Bauteilen, wie einem Bluetooth-Modul (28) und/oder eine LED versehen ist.

15. Elektrofahrrad mit einem Steckverbinder nach einem der Ansprüche 1 bis 14, wobei der Steckverbinder eine Schnittstelle zu einem Antrieb des Elektrofahrrads bildet.
